Europäisches Patentamt

European Patent Office

Office européen des brevets

(19)

(11) Numéro de publication : **0 325 643 B1**

(12) **FASCICULE DE BREVET EUROPEEN**

(45) Date de publication du fascicule du brevet :
21.08.91 Bulletin 91/34

(51) Int. Cl.⁵ : **C02F 3/28, F16K 13/08**

(21) Numéro de dépôt : **88907022.3**

(22) Date de dépôt : **29.07.88**

(86) Numéro de dépôt international :
**PCT/FR88/00398**

(87) Numéro de publication internationale :
**WO 89/00978 09.02.89 Gazette 89/04**

(54) APPAREIL POUR LE TRAITEMENT ANAEROBIE D'EAUX USEES.

(30) Priorité : 04.08.87 FR 8711045

(43) Date de publication de la demande :
02.08.89 Bulletin 89/31

(45) Mention de la délivrance du brevet :
21.08.91 Bulletin 91/34

(84) Etats contractants désignés :
AT BE DE FR GB IT LU NL

(56) Documents cités :
FR-A- 2 590 245
GB-A- 493 193
Ro-t-e Lis te,
Food Technology, vol. 36, no. 6, June 1982,
(Chicago, Illinois, US),J.A. Oleszkiewicz et
al.:"Anaerobic treatment of food industry
waste-waters", page 78, last line - page 79,
line 6; figure 2

(73) Titulaire : DEGREMONT
183, Avenue du 18 Juin 1940
F-92508 Rueil-Malmaison Cédex (FR)
Titulaire : LYONNAISE DES EAUX
52 rue de Lisbonne
F-75008 Paris (FR)

(72) Inventeur : DUROT, Jean
17, rue Francine
F-78450 Villepreux (FR)

(74) Mandataire : Armengaud, Charles
Cabinet ARMENGAUD AINE 3, Avenue
Bugeaud
F-75116 Paris (FR)

## Description

La présente invention concerne un appareil pour le traitement anaérobie d'eaux usées urbaines ou industrielles, applicable aussi bien aux effluents dilués qu'aux effluents présentant une forte pollution et aux effluents difficilement dégradables.

L'invention est relative aux traitements anaérobies suivant lesquels on réalise une dégradation de la pollution organique par fermentation dans un réacteur fermé, appelé fermenteur, en présence de bactéries méthanogènes, à une température de l'ordre de 30°C (bactéries mésophiles) ou de l'ordre de 60°C (bactéries thermophiles). Il y a production d'un gaz récupérable, constitué en majeure partie de méthane, carburant stockable et directement utilisable. L'eau traitée évacuée ne doit entraîner que le moins possible de matières en suspension, de façon à éviter des pertes de boues riches en microorganismes et à maintenir une masse active optimale dans le fermenteur ; la boue en excès est éventuellement extraite périodiquement.

Il est connu d'utiliser un traitement en deux phases : une phase de fermentation proprement dite, suivie d'une phase de clarification (le plus souvent par décantation), par laquelle on sépare le liquide interstitiel, qui est évacué, des boues qui sont retournées dans le fermenteur.

On connaît les systèmes classiques, qui comportent un fermenteur, généralement brassé en mélange intégral, et un clarificateur séparé, les boues étant recyclées du clarificateur vers le fermenteur par pompage. Des difficultés de séparation sont fréquentes, du fait de la charge pondérale élevée introduite, de dégazages, de courants de convection thermique ; pour que les boues puissent décanter et s'accumuler pour être soutirées, il est nécessaire que le clarificateur soit grand et très profond, et à grande pente, donc encombrant, ou râclé au moyen d'un équipement mécanique immergé, avec risques de corrosion. En outre, de tels appareils sont difficiles à recouvrir, d'où des problèmes d'odeur. Par ailleurs, les déperditions calorifiques dues aux transferts des boues peuvent être importantes et nécessiter un réchauffage avant recyclage dans le fermenteur, la stabilité et la rapidité de la fermentation anaérobie étant d'autant meilleures que la température de la réaction demeure constante.

On connaît également des appareils dans lesquels le clarificateur est intégré au fermenteur, qui fonctionne généralement en lit de boue à flux piston vertical. Ce type d'appareil présente l'avantage d'être compact, en ménageant dans une même enceinte les deux phases de traitement ; il permet également de maintenir les bactéries à température constante et en phase anaérobie tout au long du processus.

Le fonctionnement hydraulique du fermenteur est similaire à celui, dit "à lit de boues", des unités de décantation utilisées pour la clarification d'eau de rivière aux fins de production d'eau potable. L'effluent à traiter est réparti à la base du réacteur et traverse, de bas en haut, un lit de boue de concentration sensiblement décroissante ; au-dessus du lit de boue proprement dit, la concentration du liquide en matières en suspension est faible : la charge pondérale introduite dans le clarificateur est donc faible, et les besoins de recyclage sont réduits.

Dans de tel appareils, le clarificateur intégré peut être séparé hydrauliquement du fermenteur par une cloison continue, le recyclage de la boue décantée étant effectué par un moyen de pompage adapté, pompe ou gaz-lift : on retrouve, atténués, certains défauts exposés plus haut, forte pente et grande profondeur du décanteur, ou nécessité d'un système de râclage pour la collecte ponctuelle des boues décantées.

Différemment, le clarificateur intégré peut être réalisé en plusieurs compartiments parallèles de section triangulaire, chaque compartiment étant séparé par une zone de piégeage du gaz produit dans le fermenteur ; l'alimentation des compartiments de décantation et le retour gravitaire des boues décantées vers la zone de fermentation se font par des ouvertures aménagées dans les parois internes de séparation.

Cette disposition peut présenter certains inconvénients. En effet, l'absence de contrôle positif du point de prélèvement et du débit de retour des boues décantées rend possible le risque de perturbations sérieuses du processus de décantation ; en particulier, les orifices en point bas des zones de décantation, réservés à l'écoulement gravitaire des boues décantées vers le fermenteur placé en-dessous, peuvent être traversés par des courants de sens contraires : l'intensité et la direction des mouvements de masse liquide à l'intérieur du fermenteur varient suivant l'importance du dégagement gazeux ; il est alors fort difficile d'éviter, même par des déflecteurs soigneusement disposés, la pénétration de bulles de gaz dans les zones de décantation et des courants liquides parasites entre fermenteur et décanteurs.

Enfin, FR-A-2590245 fait connaître un appareil comportant, dans une même enceinte fermée, deux cellules identiques accolées fonctionnant alternativement et réciproquement comme cellule de fermentation et comme cellule de décantation. La cellule en phase de fermentation est brassée au gaz et fonctionne en mélange intégral ; le transfert entre fermenteur et décanteur est réalisé par un air-lift à débit constant, bloquant momentanément la méthanisation et limitant le dégagement gazeux en décantation, une tubulure d'équilibrage, reliant les deux cellules en partie inférieure, assurant un recyclage des boues décantées. Cette disposition associe à une grande simplicité de forme plusieurs avantages déjà mentionnés : compacité, constance de température du milieu,

pas d'équipement de râclage immergé. Mais le mélange intégral en zone de réaction entraîne une forte charge pondérale sur la zone en décantation et impose la nécessité d'un retour de boue pour ne pas trop déconcentrer la première au long du cycle ; on peut donc retrouver les difficultés de séparation du système contact classique. Par ailleurs, cette disposition se prête mal à un dosage par un matériau granulaire, difficilement retenu dans la zone de réaction brassée, d'où un déséquilibre probable entre les deux cellules.

La présente invention présente les avantages des deux dernières dispositions décrites, sans en avoir les inconvénients. Elle offre la compacité, la constance de temperature du milieu, et évite tout équipement mécanique mobile immergé ; elle permet de réduire la charge pondérale introduite et décantation suffisant pour fonctionner sans retour de boue en zone de fermentation, ce qui élimine tout risque de courant parasite entre les deux zones. Par ailleurs, elle autorise un dopage par un matériau granulaire susceptible de fixer les cultures bactériennes anaérobies, matériau maintenu en suspension dans le liquide interstitiel en phase de réaction de façon à faciliter les échanges, et déposé en masse en phase de séparation, de façon à éviter les dégagements de gaz susceptibles d'entraver la décantation des matières en suspension libres ; ce dopage permet d'augmenter sensiblement le poids de masse bactérienne active par unité de volume de réacteur, et donc de réduire les dimensions de l'appareil.

Comme dans le brevet cité ci-dessus, la présente invention réunit, dans une même enceinte fermée sous pression de gaz, deux cellules identiques accolées fonctionnant alternativement et réciproquement comme cellule de fermentation et comme cellule de décantation ; mais, contrairement à ce brevet, l'appareil suivant l'invention est caractérisé en ce qu'il comporte, en vue de la réalisation d'un lit de boue à flux ascendant, à la partie inférieure de chaque cellule, des moyens pour l'introduction, de façon répartie, d'eau à traiter et, à la partie supérieure de chaque cellule, des collecteurs noyés assurant, tantôt le transfert gravitaire de la liqueur de la cellule en fermentation vers la cellule en décantation, tantôt la reprise et l'évacuation de l'eau traitée.

Le fonctionnement de la cellule en fermentation en lit de boue à flux ascendant à concentration décroissante, et non en mélange intégral, réduit considérablement la charge pondérale introduite en zone de séparation et autorise le suppression du recyclage interne des boues. Dans l'appareil suivant l'invention, la masse active décantée dans la zone en décantation n'abdsorbe provisoirement plus de charge organique ; la libération de gaz est donc très réduite et ne perturbe pas la sédimentation des matières en suspension libres.

En phase de fermentation, les collecteurs noyés de reprise sont pleins de boue et doivent être purgés en fin de cycle, pour n'évacuer que de l'eau traitée en phase de séparation ; comme on le verra dans la description qui va suivre, la technologie des collecteurs autorise une vidange par mise sous pression de gaz en fin de cycle, les collecteurs étant maintenus vides le temps nécessaire à la clarification de la zone d'eau les baignant.

Les trois fonctions de transfert de boue, purge, reprise d'eau, peuvent être réalisées par vannes automatiques, mais, conformément à une disposition avantageuse de l'invention, ces fonctions peuvent être assurées par des bondes siphoïdes à compression, isolables par mise sous une faible pression de gaz, issue par exemple d'un petit ventilateur assurant également la purge des collecteurs de reprise.

Les divers caractéristiques et avantages de l'invention ressortiront de la description qui suit. Cette description est faite en référence aux dessins annexés, sur lesquels :

— la Figure 1 est un schéma de principe de l'appareil suivent l'invention, en vue de dessus ;
— la Figure 2 est une vue schématique en coupe;
— la Figure 3 est un détail des collecteurs de reprise noyés, avec vannes automatiques ;
— la Figure 4 est une variante préférée de la commande des fonctions de ces collecteurs par bondes siphoïdes à compression.

D'une façon générale, l'appareil pour le traitement anaérobie d'eaux usées suivant l'invention consiste en un réacteur fermé, sous pression de gaz, constitué par une enceinte A, dans laquelle un cloisonnement médian B détermine deux cuves ou cellules 1, 1a, identiques et accolées, fonctionnant alternativement et réciproquement comme cellule de fermentation et comme cellule de décantation.

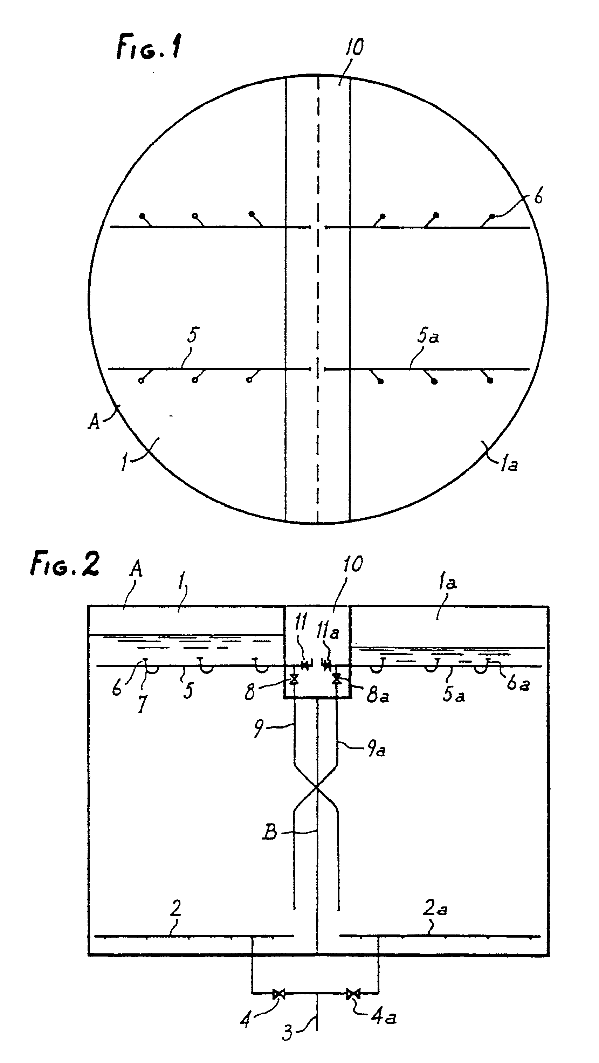

L'alimentation en eau à traiter de ces deux cellules se fait en zone basse et de façon répartie, par exemple par un ensemble de nourrices perforées 2, 2a, recevant l'eau d'une canalisation 3, équipée d'une vanne automatique 4, 4a (voir Figure 2).

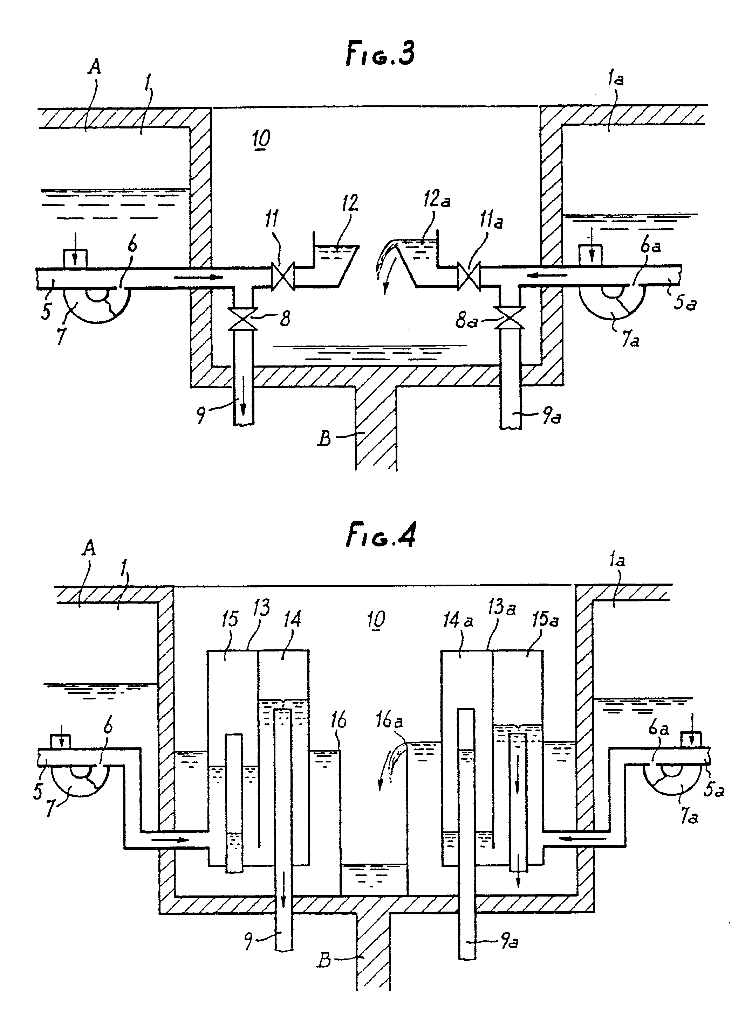

Chaque cellule comporte également, à sa partie supérieure, au moins un collecteur perforé noyé 5, 5a, avec des orifices calibrés 6, 6a prévus sur la génératrice inférieure du tube pour autoriser une purge par mise sous pression de gaz, chaque orifice étant équipé d'un déflecteur de forme spéciale, schématisé, pour la compréhension, sous la forme d'une tubulure coudée 7, 7a de façon à reprendre le liquide en zone haute (Fig. 3).

Le liquide repris par les collecteurs perforés 5, 5a est dirigé gravitairement, soit vers le fond de la cellule adjacente, par l'intermédiaire d'une vanne automatique 8, 8a et d'une conduite de descente 9, 9a, soit vers la rigole d'évacuation à l'air libre 10, par l'intermédiaire d'une vanne automatique 11, 11a et d'une pièce en forme d'auget 12, 12a formant déversoir de maintien de plan d'eau, comme le montre la Figure 3.

Dans une variante préférée représentée à la Figure 4, les vannes automatiques 8 et 11, 8a et 11a, sont remplacées par des bondes siphoïdes 13, 13a, le compartiment interne 14, 14a de chaque bonde équivalant aux vannes 8, 8a, et le compartiment 15, 15a équivalant aux vannes 11, 11a, le principe de la bonde étant d'interrompre l'écoulement par le tube interne d'un des compartiments en introduisant dans ce compartiment une pression de gaz provoquant une baisse un niveau liquide sous le débouché supérieur du tube interne ; le déversoir 16, 16a assure un joint hydraulique permettant l'isolation des compartiments d'extraction d'eau traitée.

Le fonctionnement de l'appareil est le suivant : les cellules 1 et 1a jouent alternativement le rôle de cellule en fermentation et de cellule de décantation (ou séparation). On supposera que la cellule 1 est la cellule de fermentation, et la cellule 1a celle de décantation.

La vanne 4 est ouverte, la vanne 4a est fermée. L'eau à traiter est répartie, en permanence ou cycliquement, sur le fond de la cellule 1 par les orifices des collecteurs 2, le flux ascensionnel moyen, de l'ordre de 0,5 à 1 m/h, pouvant être porté périodiquement, pendant des durées limitées, entre 1 et 4 m/h pour assurer l'homogénéité du lit de boue ou le maintien en suspension du matériau dopant.

Le transfert de la liqueur à la cellule 1a s'effectue gravitairement par le collecteur 5, la vanne 8 qui est ouverte (la vanne 11 étant fermée), ou le compartiment 14 de la bonde 13 et la descente 9. Les boues décantent dans la cellule 1a et sont stockées en attente du changement de cycle.

L'eau décantée est reprise par le collecteur 5a et libérée dans la rigole d'évacuation 10, par l'intermédiaire de la vanne automatique 11a, qui est ouverte, ou du compartiment 15a de la bonde 13a.

Le cycle dure entre 12 h et 3 jours environ.

En fin de cycle, on interrompt provisoirement l'extraction d'eau pendant une durée de l'ordre de 1 h, en fermant la vanne 11, et on alimente l'eau à traiter dans la cellule 1a en intervertissant les vannes 4 et 4a, de façon à décanter dans la cellule 1. Pendant ce temps, le collecteur 5 de la cellule 1 est purgé par mise sous pression de gaz, la vanne 8 étant fermée. Après cette période de stockage, on décomprime le collecteur 5, et les vannes 8a et 11 sont ouvertes. Un nouveau cycle commence avec la cellule 1a en fermentation et la cellule 1 en décantation.

**Revendications**

1. Appareil pour le traitement anaérobie d'eaux comportant, dans une même enceinte fermée, sous pression de gaz, deux cellules identiques accolées (1, 1a) fonctionnant alternativement et réciproquement comme cellule de fermentation et comme cellule de décantation, caractérisé en ce qu'il comporte, en vue de la réalisation d'un lit de boue à flux ascendant, à la partie inférieure de chaque cellule, des moyens (2, 2a) pour l'introduction, de façon répartie, d'eau à traiter, et, à la partie supérieure de chaque cellule, des collecteurs noyés (5, 5a) assurant, tantôt le transfert gravitaire de la liqueur de la cellule en fermentation vers la cellule en décantation tantôt la reprise et l'évacuation de l'eau traitée.

2. Appareil suivant la revendication 1, caractérisé en ce que les collecteurs noyés (5, 5a) sont munis d'orifices calibrés (6, 6a).

3. Appareil suivant l'une quelconque des revendications précédentes, caractérisé en ce que des conduites de descente (9, 9a), sur lesquelles sont prévues des vannes automatiques (8, 8a), ces conduites étant reliées aux collecteurs (5, 5a), assurent le transfert gravitaire de la liqueur de la cellule en fermentation vers la cellule en décantation.

4. Appareil suivant l'une quelconque des revendications précédentes, caractérisé par une rigole (10) d'évacuation à l'air libre du liquide traité amené à la rigole par les colecteurs perforés (5, 5a) munis à leur débouché dans la rigole de vannes automatiques (8 et 11, 8a et 11a) et d'une pièce en forme d'auget (12, 12a) formant déservoir.

5. Appareil suivant l'une quelconque des revendications 3 et 4, caratérisé en ce que les vannes automatiques (8 et 11, 8a et 11a) sont remplacées par des bondes siphoïdes (13, 13a), assurant les fonctions de transfert, purge et reprise d'eau des collecteurs perforés (5, 5a), les compartiments internes (14, 14a) de chaque bonde équivalent aux vannes (8, 8a), et les compartiments (15, 15a) équivalant aux vannes (11, 11a).

**Patentansprüche**

1. Vorrichtung für anaerobe Abwasserbehandlung, welche in ein und demselben geschlossenen Behälter unter Gasdruck zwei zusammengesetzte identische Zellen (1, 1a) umfaßt, welche alternierend und wechselweise als Fermentierzelle und als Dekantierzelle wirken, **dadurch gekennzeichnet, daß** zur Bildung eines Schlammbettes mit aufsteigendem Fluß jeweils im unteren Bereich der Zellen Einrichtungen (2, 2a) für die Zufuhr und Verteilung von zu behandelndem Wasser und jeweils im oberen Bereich der Zellen eingelassene Sammeleinrichtungen (5, 5a) vorgesehen sind, die sowohl eine schwerkraftbedingte Überführung der Flüssigkeit der Fermentierzelle zur Dekantierzelle als auch die Rückführung und den Abfluß des behandelten Wassers sicherstellen.

2. Vorrichtung nach Anspruch 1, **dadurch gekennzeichnet, daß** die Tauch-Sammeleinrichtungen (5, 5a) mit kalibrierten Öffnungen (6, 6a) versehen sind.

3. Vorrichtung nach einem der vorhergehenden Ansprüche, **dadurch gekennzeichnet, daß** Fallrohre (9, 9a), auf denen automatische Ventile (8, 8a) angeordnet sind, die gravitationsbedingte Beförderung des Flüssigkeit der Fermentierzelle zur Dekantierstelle gewährleisten, wobei die Rohre mit den Sammeleinrichtungen (5, 5a) verbunden sind.

4. Vorrichtung nach einem der vorhergehenden Ansprüche, **gekennzeichnet durch** einen Abfluß (10), um die von behandelter Flüssigkeit freie Luft abzuführen, die durch die mit Öffnungen versehenen Sammeleinrichtungen (5, 5a) dem Abfluß zugeführt wird, wobei die Sammeleinrichtungen an ihrem Auslaß im Abfluß Regulierventile (8 und 11, 8a und 11a) und ein als Überlauf dienendes, rumpfmuldenförmiges Element (12, 12a) aufweisen.

5. Vorrichtung nach einem der Ansprüche 3 und 4, **dadurch gekennzeichnet, daß** die Regulierventile (8 und 11, 8a und 11a) durch Überlaufstandrohre (13, 13a) ersetzt sind, die die Wassertransport-, -entleerungs- und -rückführfunktionen von den mit Öffnungen versehenen Sammeleinrichtungen (5, 5a) sicherstellt, wobei die inneren Kammern (14, 14a) jedes Standrohrs zu den Ventilen (8, 8a) und die Kammern (15, 15a) zu den Ventilen (11, 11a) äquivalent sind.

## Claims

1. Apparatus for anaerobic treatment of waste water comprising, in a single closed container under gas pressure, two identical cells (1, 1a) side-by-side, operating alternately and reciprocally as fermentation cell and as settling cell, characterized in that it comprises, for the purpose of creating an ascending flow sludge bed, in the lower part of each cell, means (2, 2a) for the introduction in distributed manner of the waste water to be treated and, at the upper part of each cell, submerged collectors (5, 5a) assuring, at one time the transfer by gravity of the liquor from the cell acting in fermentation to the cell acting in settling, and at another time the collecting and discharge of the treated water.

2. Apparatus according to Claim 1, characterized in that the submerged collectors (5, 5a) are provided with calibrated apertures (6, 6a).

3. Apparatus according to any one of the preceding Claims, characterized in that down pipes (9, 9a), on which automatic valves (8, 8a) are fitted, these down pipes being connected to the collectors (5, 5a), assure the transfer by gravity of the liquor from the fermentation cell to the settling cell.

4. Apparatus according to any one of the preceding Claims, characterized by an open-air discharge channel (10) for the treated liquid, brought to the channel by the perforated collectors (5, 5a) equipped, at their outlet into the channel, with automatic valves (8 and 11, 8a and 11a) and with a trough-shaped component (12, 12a) forming an overflow.

5. Apparatus according to any one of Claims 3 and 4, characterized in that the automatic valves (8 and 11, 8a and 11a) are replaced by siphonal gates (13, 13a), assuring the functions of transfer, purging and receiving water from the perforated collectors (5, 5a), the internal compartments (14, 14a) of each gate being equivalent to the valves (8, 8a) and the compartments (15, 15a) being equivalent to the valves (11, 11a).

**Fig. 1**

**Fig. 2**

6

## Fig.3

## Fig.4